# FASCICULE DE BREVET EUROPEEN

(11) **EP 1 964 778 B1**
(45) Date de publication et mention de la délivrance du brevet: **07.04.2010**
(21) Numéro de dépôt: 08102032.3
(22) Date de dépôt: 26.02.2008
(51) Int. Cl.: B64G 1/66, F16M 11/04

(54) **Pivot traversant à lames**
Drehgelenk mit Blattfedern
Pivot with blades

(30) Priorité: 27.02.2007 FR 0753521
(43) Date de publication de la demande: 03.09.2008
(73) Titulaire: Thales, 92200 Neuilly Sur Seine (FR)
(72) Inventeur: Jeandot, Xavier, 06210, MANDELIEU (FR); Baudasse, Yannick, 06130, GRASSE (FR)
(74) Mandataire: Esselin, Sophie

(56) Documents cités:
- EP-A1- 0 449 001
- FR-A1- 2 212 584
- US-A- 5 209 461

## Description

La présente invention se rapporte à un pivot traversant, c'est-à-dire un dispositif apte à supporter un arbre rotatif qui s'étant des deux côtés du pivot, et à un dispositif de support d'un arbre rotatif à amplitude de rotation limitée, réalisé avec ce pivot.

Un pivot avec les caractéristiques du préambule de la revendication 1 est divulgué par le document US 5,209,461.

Dans les applications spatiales, il est nécessaire de pouvoir orienter certains éléments d'un satellite ou d'un véhicule spatial, tels qu'une antenne, un mât, etc., dans une direction prédéterminée afin, par exemple, de les diriger vers une étoile fixe, de conserver un pointage vers un point à la surface de la terre ou bien encore de balayer une zone particulière à la surface de la terre ou d'un astre quelconque. Ces positionnements doivent être fréquemment corrigés pour compenser d'inévitables dérives dans la tenue de cette direction et ces multiples corrections entraînent la réalisation d'un nombre important de cycles de micro-rotation pour ces appendices spatiaux et pour leurs dispositifs de support. Cette phase est appelée pointage fin.

Compte tenu du caractère irréversible de la mise en orbite d'un satellite, il est nécessaire de prévoir lors de la conception de l'engin spatial, une durée de vie, mesurée en nombre de cycles, très importante pour ces dispositifs de support, de façon à garantir leur capacité à résister à ces très nombreuses sollicitations. Par exemple la durée de vie peut être supérieure à 600000 cycles. D'autres exigences des dispositifs de support sont une forte capacité de tenue mécanique (vis-à-vis des efforts extérieurs et moments de flexion exercés sur l'arbre supporté), une forte rigidité transverse, un guidage sans jeu de grande précision, une amplitude de rotation supérieure à 1° dans les deux sens, et un faible couple résistant.

Il est connu de réaliser un dispositif de support pour un arbre rotatif avec un pivot à lames flexibles croisées, notamment ceux connus sous l'appellation « Pivot Bendix ». Ce type de pivot n'est pas traversant. Il est donc nécessaire de monter l'arbre supporté en porte-à-faux, ce qui implique des contraintes importantes dans les lames du pivot et une transmission de contraintes importantes au bâti support, même dans le cas d'un montage à double pivot. Ce type de pivot offre donc une tenue mécanique et une rigidité transverse limitée, et ne répond pas de manière satisfaisante à toutes les exigences pour la réalisation d'un dispositif de pointage fin.

Il est également connu de supporter un arbre avec un dispositif comprenant deux pivots constitués de roulements à billes. Un tel dispositif est sujet à l'usure et présente donc une durée de vie limitée. Il ne répond donc pas non plus de manière satisfaisante à toutes les exigences pour la réalisation d'un dispositif de pointage fin destiné à une application spatiale.

L'invention a pour but de proposer un pivot et un dispositif de support d'un arbre rotatif, qui ne présente pas au moins certains des inconvénients précités de l'art antérieur. En particulier, l'invention a pour but de proposer un pivot et un dispositif de support d'un arbre rotatif qui conviennent à la réalisation d'un dispositif de pointage fin, notamment pour une application spatiale.

Pour cela, l'invention fournit un pivot traversant selon la revendication 1.

Grâce à ces caractéristiques, le pivot peut supporter un arbre traversant, ce qui permet une bonne tenue mécanique. De plus, comme la rotation du rotor est autorisée par une déformation des éléments flexibles, il n'y a pas d'usure mécanique par frottement et la durée de vie est importante. On a constaté que l'agencement des éléments flexibles avec un angle d'inclinaison permettait de limiter les efforts de traction et de flexion dans les éléments flexibles. Le couple résistant et les contraintes dans les éléments flexibles sont donc faibles, ce qui permet un guidage de précision sur une amplitude de plusieurs degrés, et une durée de vie importante.

De préférence, le stator comprend un cadre en forme de polygone régulier, les éléments flexibles étant fixés aux sommets respectifs du cadre.

Avantageusement, le rotor comprend une bague cylindrique, les éléments flexibles étant fixés à une surface extérieure de ladite bague.

Selon un mode de réalisation particulier, la bague présente un orifice central, le rotor étant apte à recevoir un arbre traversant passant par ledit orifice central.

De préférence, le pivot comprend trois éléments flexibles répartis uniformément.

Avantageusement, les éléments flexibles sont des lames qui présentent une forme plane rectangulaire et sont agencées dans un plan parallèle à l'axe de rotation. Cela permet de soutenir un effort axial.

Selon un mode de réalisation particulier, l'angle d'inclinaison est compris entre 4° et 5°.

L'invention fournit également un dispositif de support d'un arbre, comprenant deux pivots selon l'invention ci-dessus, agencés à distance l'un de l'autre avec leurs axes de rotation respectifs confondus.

Cet agencement permet de mieux reprendre les efforts exercés sur l'arbre supporté, ce qui améliore la capacité de tenue mécanique et la rigidité. De plus, il est possible que l'arbre porte des éléments utiles des deux côtés du dispositif de support.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective d'un pivot selon un mode de réalisation de l'invention,
- la figure 2 est une représentation schématique de la disposition des lames du pivot de la figure 1,
- la figure 3 est un graphe représentant la relation entre le couple appliqué et l'angle de rotation, pour le pivot de la figure 1, pour différents angles d'inclinaison,
- la figure 4 est une vue similaire à la figure 2,
- la figure 5 est un dispositif de support comprenant deux pivots du type de la figure 1,
- la figure 6 représente une vue en coupe du dispositif de la figure 5,
- les figures 7 et 8 sont des graphes représentant les contraintes dans les lames du pivot de la figure 1, en fonction de l'angle de rotation.

Le pivot 1 comprend un stator 2 comprenant un cadre en forme de triangle isocèle, et un rotor 3 apte à tourner par rapport au stator 2 autour d'un axe A. Le rotor 3 présente la forme d'une bague cylindrique de révolution, d'axe A. Les centres du stator 2 et du rotor 3 sont confondus.

Le stator 2 et le rotor 3 sont reliés par trois lames 4. Les lames 4 présentent une forme de plaque rectangulaire plane. Elles sont reliées aux sommets respectifs du stator 2 par un petit côté, et à une surface extérieure du rotor 3 par le petit côté opposé.

Le stator pourrait présenter une forme différente en fonction du mécanisme environnant, et notamment un nombre de côtés différent en fonction du nombre de lames, qui n'est pas nécessairement trois. De plus, les lames pourraient être remplacées par d'autres éléments flexibles, par exemples des tubes.

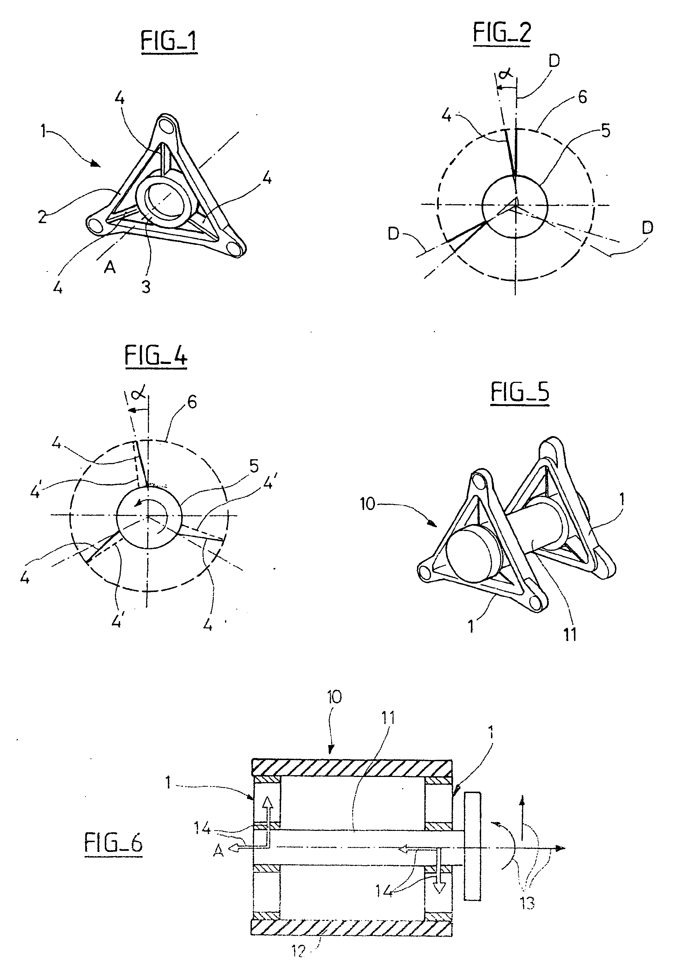

La figure 2 représente l'agencement des lames 4 de manière plus précise. La figure 2 représente la position des lames 4 quand le pivot 1 est dans un état de repos, c'est-à-dire quand aucun couple ne sollicite le rotor 3 en rotation. Les cercles d'implantation 5 et 6 présentent des diamètres correspondant aux positions respectives des petits côtés des lames 4. Les droites D correspondent à une direction radiale passant par l'axe A. On constate que les lames 4 forment un angle, appelé angle d'inclinaison α, par rapport à la direction radiale.

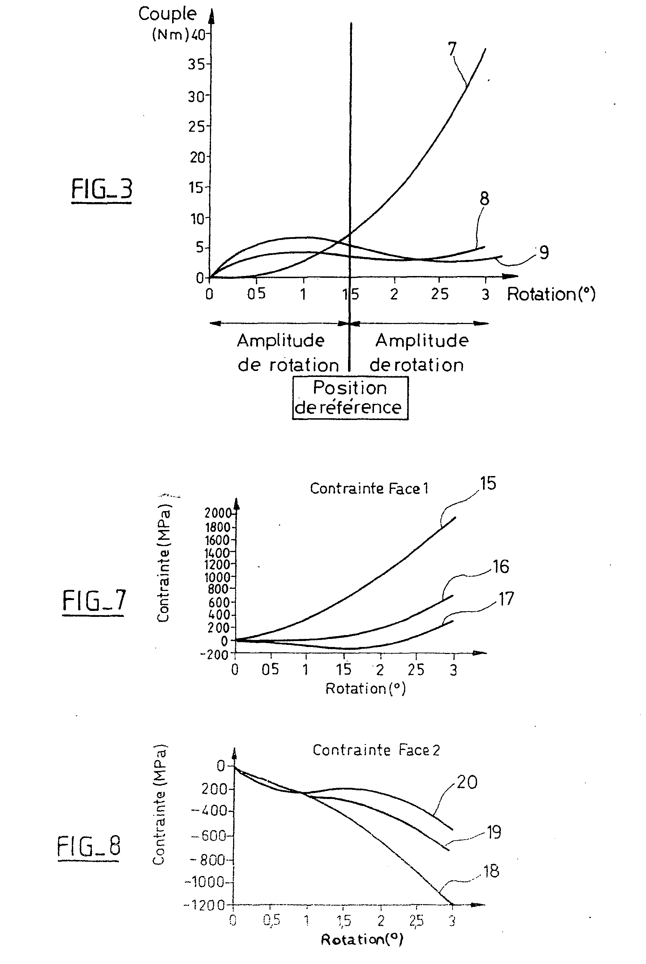

Le rotor 3 peut tourner dans le sens indiqué par la flèche 15 sur la figure 4, qui correspond au sens de l'angle d'inclinaison α. Sur la figure 4, les traits interrompus 4' représentent la position des lames 4 quand le rotor 3 a tourné de quelques degrés. La figure 3 représente la relation entre le couple appliqué et l'angle de rotation par rapport à la position de la figure 2. Le couple correspond aux efforts de traction et de flexion des lames 4 dus à la rotation du rotor 3.

La courbe 7 correspond à des lames droites, c'est-à-dire un angle d'inclinaison α nul et permet de comparer le couple résistant dans différents cas d'inclinaison de lame. On constate que le couple augmente de manière asymptotique avec l'angle de rotation, car les composantes du couple dues à la traction et à la flexion s'additionnent. Les courbes 8 et 9 correspondent respectivement à des angles d'inclinaison α de 4° et 5°. Le couple reste faible et stable dans la plage d'angle de rotation considérée, car dans ce cas à partir d'un certain angle de rotation la composante de traction change de signe et se retranche à la composante de flexion.

On constate donc que le pivot 1 permet la rotation du rotor 3 dans une plage de plusieurs degrés autour d'une position de référence, avec un couple limité et stable, donc sans dépasser la capacité du moteur. Dans l'exemple représenté, on a choisi 1,5° comme position de référence, et le rotor 3 peut tourner dans les deux sens à partir de cette position. Sur la figure 4, les traits interrompus 4' représentent la position des lames 4 quand le rotor 3 est dans la position de référence.

Les figures 7 et 8 représentent les contraintes présentes au niveau des faces des lames 4, en fonction de l'angle de rotation. Les courbes 15 et 18 correspondent à des lames droites, les courbes 16 et 19 à un angle d'inclinaison α de 4°, et les courbes 17 et 20 à un angle d'inclinaison α de 5°. En comparant les courbes 15 et 18 aux autres, on constate que le fait de prévoir un angle d'inclinaison α non nul permet de limiter les contraintes, ce qui améliore la tenue mécanique et la durée de vie du pivot 1.

Il existe un angle d'inclinaison α optimal qui permet de minimiser le couple et/ou les contraintes. Cet angle optimal peut dépendre des dimensions du pivot 1 et du matériau utilisé. L'angle optimal est compris dans la plage 2° à 10°, de préférence 4° à 5°.

Les figures 5 et 6 représentent un dispositif de support 10 pour arbre rotatif 11, réalisé avec deux pivots 1. Les stators 2 des pivots 1 sont fixés à un bâti 12, à distance l'un de l'autre avec leurs axes A confondus. L'arbre rotatif 11 est aligné avec l'axe A et est fixé aux deux rotors 3. Dans ce dispositif, les efforts exercés sur l'arbre 11, représentés par les flèches 13, sont repris au niveau des deux pivots, comme le montrent les flèches 14, ce qui améliore la tenue mécanique du dispositif.

## Revendications

1. Pivot (1) traversant comprenant un stator (2) et un rotor (3) apte à tourner par rapport au stator autour d'un axe de rotation (A), le rotor étant apte à recevoir un arbre traversant (11) aligné avec ledit axe de rotation, le rotor étant relié au stator par une pluralité d'éléments flexibles (4) aptes à se déformer pour permettre la rotation du rotor, **caractérisé par le fait que** dans un état de repos, les éléments flexibles forment un angle d'inclinaison (α) par rapport à une direction radiale (D) passant par l'axe de rotation, compris entre 2° et 10°.

2. Pivot selon la revendication 1, dans lequel le stator comprend un cadre en forme de polygone régulier, les éléments flexibles étant fixés aux sommets respectifs du cadre.

3. Pivot selon l'une des revendications 1 à 2, dans lequel le rotor comprend une bague cylindrique, les éléments flexibles étant fixés à une surface extérieure de ladite bague.

4. Pivot selon la revendication 3, dans lequel la bague présente un orifice central apte à recevoir un arbre traversant passant par ledit orifice central.

5. Pivot selon l'une des revendications 1 à 4, comprenant trois éléments flexibles répartis uniformément.

6. Pivot selon l'une des revendications 1 à 5, dans lequel les éléments flexibles sont des lames qui présentent une forme plane rectangulaire et sont agencées dans un plan parallèle à l'axe de rotation.

7. Pivot selon la revendication 1, dans lequel l'angle d'inclinaison est compris entre 4° et 5°.

8. Dispositif de support (10) d'un arbre (11), comprenant deux pivots (1) selon l'une des revendications 1 à 7 agencés à distance l'un de l'autre avec leurs axes de rotation (A) respectifs confondus.

## Claims

1. Through pivot (1) comprising a stator (2) and a rotor (3) capable of turning relative to the stator around an axis of rotation (A), the rotor being designed to receive a through shaft (11) aligned with said axis of rotation, the rotor being connected to the stator by a plurality of flexible elements (4) capable of deforming to allow rotation of the rotor, **characterised in that**, in an idle state, the flexible elements form an angle of inclination relative to a radial direction (D), passing through the axis of rotation, of between 2° and 10°.

2. Pivot according to claim 1, wherein the stator comprises a frame in the form of a regular polygon, the flexible elements being fixed to the respective vertices of the frame.

3. Pivot according to one of claims 1 to 2, wherein the rotor comprises a cylindrical ring, the flexible elements being fixed to an external surface of said ring.

4. Pivot according to claim 3, wherein the ring has a central orifice capable of receiving a through shaft passing through said central orifice.

5. Pivot according to one of claims 1 to 4, comprising three uniformly distributed flexible elements.

6. Pivot according to one of claims 1 to 5, wherein the flexible elements are blades which present a flat rectangular shape and which are arranged in a plane parallel to the axis of rotation.

7. Pivot according to claim 1, wherein the angle of inclination is between 4° and 5°.

8. Device for supporting (10) a shaft (11), comprising two pivots (1) according to one of claims 1 to 7 arranged at a distance from each other with their axes of rotation (A) coinciding.

## Patentansprüche

1. Durchgehendes Drehgelenk (1), das einen Ständer (2) und einen Läufer (3) umfasst, der sich in Bezug auf den Ständer um eine Rotationsachse (A) drehen kann, wobei der Läufer eine durchgehende Welle (11) aufnehmen kann, die mit der Rotationsachse fluchtet, wobei der Läufer durch mehrere flexible Elemente (4), die sich verformen können, um eine Rotation des Läufers zuzulassen, mit dem Läufer verbunden ist, **dadurch gekennzeichnet, dass** die flexiblen Elemente im Ruhezustand einen Neigungswinkel zwischen 2° und 10° in Bezug auf eine durch die Rotationsachse verlaufende radiale Richtung (D) bilden.

2. Drehgelenk nach Anspruch 1, bei dem der Ständer einen Rahmen in Form eines regelmäßigen Polygons umfasst, wobei die flexiblen Elemente an den jeweiligen Scheitelpunkten des Rahmens befestigt sind.

3. Drehgelenk nach einem der Ansprüche 1 bis 2, wobei der Läufer einen zylindrischen Ring umfasst, wobei die flexiblen Elemente an einer Außenfläche des Rings befestigt sind.

4. Drehgelenk nach Anspruch 3, wobei der Ring eine mittlere Öffnung hat, die eine durchgehende Welle aufnehmen kann, die durch die mittlere Öffnung verläuft.

5. Drehgelenk nach einem der Ansprüche 1 bis 4, das drei gleichmäßig verteilte flexible Elemente umfasst.

6. Drehgelenk nach einem der Ansprüche 1 bis 5, bei dem die flexiblen Elemente Lamellen sind, die eine flache rechteckige Form haben und in einer Ebene parallel zur Rotationsachse angeordnet sind.

7. Drehgelenk nach Anspruch 1, bei dem der Neigungswinkel zwischen 4° und 5° liegt.

8. Vorrichtung zum Lagern (10) einer Welle (11), die zwei Drehgelenke (1) nach einem der Ansprüche 1 bis 7 umfasst, die in einem Abstand voneinander angeordnet sind und deren Rotationsachsen (A) miteinander übereinstimmen.
